# EUROPÄISCHE PATENTSCHRIFT

(11) **EP 0 685 027 B1**
(45) Veröffentlichungstag und Bekanntmachung des Hinweises auf die Patenterteilung: **10.07.1996**
(21) Anmeldenummer: 94905020.7
(22) Anmeldetag: 10.01.1994
(51) Int. Cl.: F01N 3/28

(54) **ELEKTRISCH ISOLIERENDE GASDICHTE DURCHFÜHRUNG MINDESTENS EINES ELEKTRISCHEN LEITERS DURCH EINEN METALLISCHEN MANTEL**
ELECTRICALLY INSULATED GASTIGHT FEED-THROUGH FOR AT LEAST ONE ELECTRICAL CONDUCTOR THROUGH A METAL CASING
TRAVERSEE ETANCHE AUX GAZ ISOLEE ELECTRIQUEMENT DESTINEE A AU MOINS UN CONDUCTEUR ELECTRIQUE TRAVERSANT UNE GAINE METALLIQUE

(30) Priorität: 08.02.1993 DE 4303581
(43) Veröffentlichungstag der Anmeldung: 06.12.1995
(73) Patentinhaber: Emitec Gesellschaft für Emissionstechnologie mbH, D-53797 Lohmar (DE)
(72) Erfinder: SWARS, Helmut, D-51429 Bergisch Gladbach (DE)
(74) Vertreter: Kahlhöfer, Hermann, Dipl.-Phys.
(86) Internationale Anmeldenummer: EP9400047
(87) Internationale Veröffentlichungsnummer: WO9418442

(56) Entgegenhaltungen:
- WO-A-92/02714
- US-A- 2 625 634
- US-A- 4 362 016

## Beschreibung

Die vorliegende Erfindung betrifft die elektrisch isolierende gasdichte Durchführung mindestens eines elektrischen Leiters durch einen metallischen Mantel eines Abgassystems eines Verbrennungsmotors, insbesondere eines elektrisch beheizbaren katalytischen Konverters.

Elektrisch isolierende gasdichte Durchführungen sind in großer Zahl aus dem Stand der Technik bekannt. Es gibt solche Durchführungen für die verschiedensten Zwecke.

Aufgrund immer strenger werdender Vorschriften zur Limitierung schädlicher Abgase aus Kraftfahrzeugen, werden zunehmend komplexere Abgasreinigungssysteme eingesetzt. Neben einem geregelten Dreiwegekatalysator werden insbesondere zur Verringerung des Schadstoffausstoßes während der Kaltstartphase eines Kraftfahrzeuges elektrisch beheizbare katalytische Konverter eingesetzt. Ein hierfür geeigneter elektrisch beheizbarer Wabenkörper wird beispielsweise in der WO 92/02714 beschrieben. Von diesem Stand der Technik geht die vorliegende Erfindung aus, wobei bezüglich Einzelheiten des Aufbaus elektrisch beheizbarer Wabenkörper auf diese Schrift vollinhaltlich Bezug genommen wird, um Wiederholungen zu vermeiden. Das Problem bei elektrischen Durchführungen an einem Abgassystem eines Kraftfahrzeuges besteht darin, daß die Durchführung elektrisch isolierend, mechanisch stabil, gasdicht und für sehr hohe Temperaturen und hohe Temperaturtransienten geeignet sein muß. Hierzu wird im Stand der Technik neben einer elektrisch isolierenden Beschichtung die Abdichtung mit einem Quellmaterial, z. B. aus Glimmerfasern, vorgeschlagen. Allerdings ist es schwierig, solche Abdichtungen tatsächlich vollständig gasdicht und mit langer Lebensdauer herzustellen. Gerade bei Abgasanlagen mit geregeltem Dreiwegekatalysator kommt es für die genaue Regelung aber darauf an, daß das System gasdicht ist, da sonst die im Inneren durchgeführten Sauerstoffmessungen verfälscht werden können.

Grundsätzlich sind vergleichbar gelagerte Probleme im Stand der Technik durch Metall-Keramik-Konstruktionen, wie z. B. bei Zündkerzen, seit langer Zeit gelöst. Allerdings sind solche Verbindungen in der Herstellung aufwendig und daher teuer.

Bei elektrisch beheizbaren katalytischen Konvertern kommt allerdings noch hinzu, daß diese im allgemeinen mit einem Löt- oder Sinterprozeß hergestellt werden, wobei die elektrische Isolierung der Durchführung zur Vereinfachung der Fertigung schon fixiert sein sollte. Diese Isolierung muß also den Temperaturen des Löt- oder Sinterprozesses standhalten können.

Aufgabe der vorliegenden Erfindung ist daher die Schaffung einer elektrisch isolierenden gasdichten Durchführung, insbesondere für die Verhältnisse an Abgassystemen von Verbrennungsmotoren und an elektrisch beheizbaren katalytischen Konvertern, welche kostengünstig herstellbar ist und trotzdem ihre Eigenschaften über eine lange Lebensdauer beibehält.

Zur Lösung dieser Aufgabe dient eine elektrisch isolierende gasdichte Durchführung mindestens eines elektrischen Leiters durch einen metallischen Mantel eines Abgassystems eines Verbrennungsmotors, insbesondere eines elektrisch beheizbaren katalytischen Konverters, wobei der Mantel im Bereich der Durchführung einen Kragen aufweist, in dem der elektrische Leiter verläuft. Dabei ist die Durchführung in zwei hintereinanderliegende Abschnitte unterteilt, von denen der erste näher am Abgassystem liegende Abschnitt zur elektrischen Isolierung und beständig gegen Temperaturen von bis zum 1300° C ausgebildet ist, aber nicht vollständig gasdicht zu sein braucht, während der zweite, weiter vom Abgassystem entfernte Abschnitt, als gasdichte und elektrisch isolierende Durchführung für Temperaturen von bis zu 500° C ausgebildet ist.

Die Erfindung geht dabei von der Erkenntnis aus, daß die maximal im Abgassystem auftretenden Temperaturen schon in einem geringen Abstand von beispielsweise einem Zentimeter außerhalb des Abgassystems bei metallischen Durchführungen stark abnehmen. Es ist daher nicht zwingend erforderlich, alle von der Durchführung geforderten Eigenschaften in einem kleinen Bereich und mit einem einzigen Dicht- und Isoliermaterial zu bewerkstelligen. Durch Unterteilung der Durchführung in zwei Abschnitte mit unterschiedlicher Funktion lassen sich für die einzelnen Eigenschaften preisgünstig verfügbare Materialien verwenden, ohne daß aufwendige Fertigungsschritte erforderlich sind. Insbesondere kann das Isoliermaterial im ersten Abschnitt schon vor einem Löt- oder Sinterprozeß eingesetzt werden. Es dient dann schon während der Fertigung wie auch später zur mechanisch stabilen Halterung der (des) elektrischen Leiter(s).

So kann beispielsweise als elektrisches Isoliermaterial im ersten Abschnitt ein keramisches Material, vorzugsweise gepreßter Ton, verwendet werden. Dieses Material gewährleistet zuverlässig bei hohen Temperaturen eine elektrische Isolierung, kann jedoch keine dauerhafte Abdichtung bewirken.

Im zweiten Abschnitt, in dem bereits eine wesentlich niedrigere Maximaltemperatur herrscht und auch die auftretenden Transienten wesentlich geringer sind, kann als elektrisches Isoliermaterial ein elastisch-plastisches Material verwendet werden, welches gleichzeitig auch über eine lange Lebensdauer gute Dichteigenschaften aufweist. Hierfür kommen für Dichtungen in Abgassystemen oder bei Zylinderkopfdichtungen bekannte Materialien in Betracht. Der zweite Abschnitt kann problemlos nach einem Löt- oder Sinterprozeß hergestellt werden, so daß er nicht so hohen Temperaturbelastungen ausgesetzt ist.

Die Kombination der beiden Abschnitte bewirkt dann alle gewünschten Eigenschaften, nämlich eine mechanisch stabile elektrische Isolierung und Gasdichtheit unter allen Betriebsbedingungen.

Die Durchführung enthält vorzugsweise einen runden Kragen mit konzentrisch angeordnetem Leiter.

Eine solche Durchführung kann natürlich auch gleichzeitig zwei oder mehr elektrische Leiter nebeneinander enthalten, ohne daß sich das Prinzip der vorliegenden Erfindung dadurch ändert, wobei dann der Kragen vorzugsweise rechteckig ist.

Wichtig ist auch, daß sich solche Durchführungen für elektrische Leiter eignen, in denen Ströme von 50 bis 500 Ampere oder sogar darüber fließen sollen. Solche Leiter müssen große Querschnitte haben, wodurch auch wesentlich stärkere Probleme unterschiedlicher Dehnungen bei wechselnden Temperaturen auftreten als dies beispielsweise bei Zündkerzen der Fall ist. Gerade für elektrische Leiter mit großen Leiterquerschnitten eignet sich die vorliegende Erfindung durch die Verwendung von elastisch-plastischem Material als Dichtung besonders.

Um die Durchführung einfach herstellen zu können und eine Anpressung des elastisch-plastischen Materials an die angrenzenden Flächen sicherzustellen, ist es besonders günstig, wenn die Durchführung von einer Metallkappe oder Schelle umschlossen ist, die so geformt ist, daß sie zumindest den zweiten Abschnitt vollständig umschließt und zusammenpreßt. Ähnliche Konstruktionen für einen einzelnen Abschnitt sind aus dem Stand der Technik bekannt, jedoch bietet die Unterteilung der Durchführung in zwei Abschnitte noch zusätzliche konstruktive Möglichkeiten für die Form und Befestigung der Kappe.

So können beispielsweise Lappen des Mantels, zwischen denen der elektrische Leiter liegt, übersehen und seitlich neben dem Leiter miteinander gasdicht zu einem Kragen verbunden sein, vorzugsweise durch Hartlöten oder Schweißen. In diesem Bereich ist daher eine völlige Dichtheit gewährleistet.

Wenn eine Metallkappe den zweiten Abschnitt und die überstehenden Lappen zumindest teilweise umschließt, kann eine vollständige Dichtheit des Systems gewährleistet werden. Bevorzugt kann die Metallkappe mit den überstehenden Lappen durch Hartlöten oder Schweißen verbunden sein. Auch ist es möglich, daß die Kuppe Teil der überstehenden Lappen ist, indem diese seitliche Flügel aufweisen, die zu einer Kuppe zusammengebogen werden können.

Ausführungsbeispiele der Erfindung, auf das diese jedoch nicht beschränkt ist, sind in der Zeichnung dargestellt, und zwar zeigen
- Fig. 1: schematisch den Querschnitt durch eine Durchführung an einem elektrisch beheizbaren Wabenkörper und
- Fig. 2, 3: ein Beispiel für den Aufbau einer um die Durchführung gefalteten Metallkappe in Seitenansicht (Fig. 3) und im Querschnitt (Fig. 2).

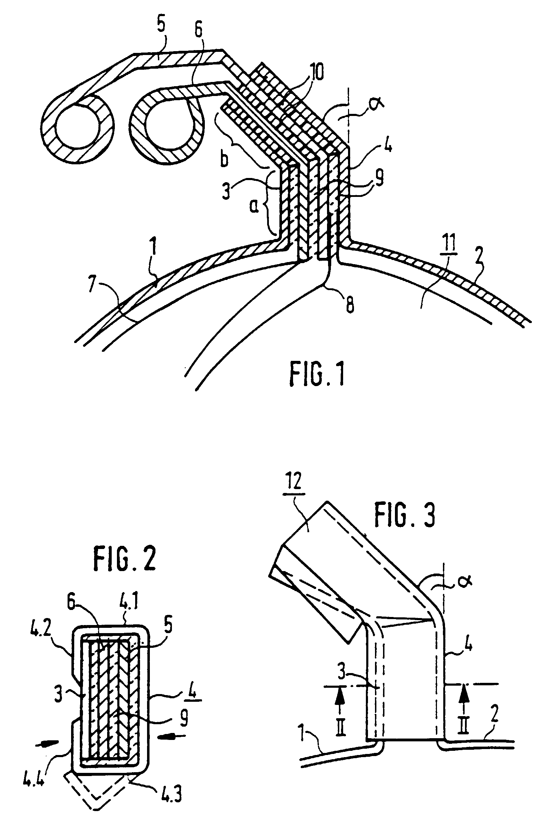

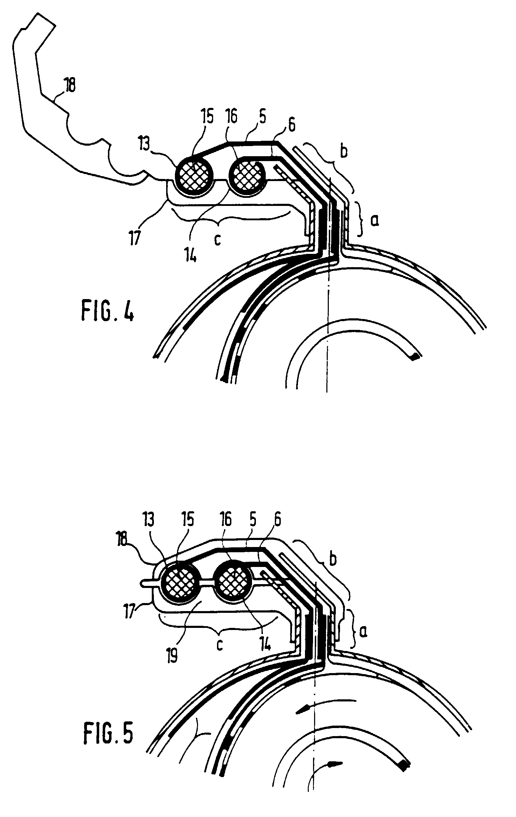

Fig. 1 zeigt nur schematisch angedeutet den inneren Aufbau eines elektrisch beheizbaren Wabenkörpers 11 in einem Abgassystem, in welchem sich elektrisch leitende Strukturen 7, 8 zur Einleitung des elektrischen Stromes befinden. Bezüglich Einzelheiten des Aufbaus solcher Wabenkörper wird auf die WO 92/02714 verwiesen. Das Abgassystem ist von einem Mantel umschlossen, welcher beispielsweise aus zwei Halbschalen 1, 2 hergestellt ein kann. Im Bereich der Durchführung weisen die Halbschalen 1, 2 überstehende Lappen 3, 4 auf, zwischen denen für hohe Ströme ausgelegte elektrische Leiter 5, 6 nach außen geführt sind. Außen sind an den elektrischen Leitern 5, 6 im allgemeinen Anschlüsse für Zuleitungen mit großem Querschnitt vorgesehen. Der Bereich der Durchführung zwischen den Lappen 3, 4 ist in zwei Abschnitte a, b unterteilt, wobei als Isoliermaterial zwischen den Lappen 3, 4 und den Leitern 5, 6 ein keramisches Material 9, vorzugsweise Ton, vorgesehen ist. Im zweiten Abschnitt b, der weiter außen liegt und daher nur noch geringeren Maximaltemperaturen ausgesetzt ist, wird als Isolier- und Dichtmaterial zwischen den elektrischen Leitern 5, 6 und den Lappen 3, 4 ein dauerelastisch-plastisches Material eingesetzt, z. B. von Zylinderkopfdichtungen bekanntes Material. Der zweite Abschnitt b kann gegenüber dem ersten Abschnitt a um einen Winkel α von 30° bis 100° insbesondere etwa 45° abgeknickt sein, wodurch sich ein platzsparender Aufbau ergibt, wobei die elektrischen Leiter 5, 6 weiter außen nochmals abgewinkelt sein können, so daß insgesamt eine kompakte Anordnung mit geschützten Anschlüssen für Zuleitungen entsteht. Die gesamte Durchführung kann von einer in Fig. 1 nicht dargestellten Kappe umschlossen sein, welche z. B. den in den Fig. 2 und 3 gezeigten Aufbau hat. Diese Kappe läßt sich um die Durchführung falten, wobei eine Anpressung des elastisch-plastischen Materials 10 an die angrenzenden Flächen bewirkt wird, was zu einer dauerhaften Dichtheit führt. Falls nötig kann die Kappe 12 im ersten Abschnitt a mit den Lappen 3, 4 verschweißt werden, jedoch kann eine haltbare Befestigung auch durch Falze oder dergleichen erfolgen. Noch vorteilhafter ist es, wenn die Kappe 12 einer der Halbschalen 1, 2 bzw. deren überstehenden Lappen 3, 4 angeformt ist, wie in den Fig. 2 und 3 gezeigt. Wie aus der Fig. 3 ersichtlich, kann eine angeformte Kappe 12 auch aus zwei Abschnitten bestehen, wobei der erste Abschnitt schon von einem Löt- oder Sinterprozeß um den ersten Abschnitt a der Durchführung gefaltet werden kann (siehe Fig. 2). Dadurch wird das Isoliermaterial 9 schon fixiert, während die Leiter 5, 6 und die Lappen 3, 4 im Abschnitt b noch auseinanderklaffen. Erst nach dem Löt- oder Sinterprozeß wird dort elastisch-plastisches Material eingesetzt und die Kappe 12 geschlossen und zusammengepreßt.
Dann ergibt sich auch im Abschnitt b das gleiche Bild im Querschnitt, das Fig. 2 für den Abschnitt a zeigt. Die Kappe 12 (angeformt an den Lappen 4) umschließt mit ihren Flanken 4.1, 4.3 und den Endstücken 4.2, 4,4 die ganze Durchführung und preßt die Teile aneinander.

Die vorliegende Erfindung eignet sich insbesondere zur kostengünstigen Herstellung von elektrischen Durchführungen an beheizbaren katalytischen Konvertern, die mit Strömen von 50 bis 500 Ampere beaufschlagt werden.

## Patentansprüche

1. Elektrisch isolierende gasdichte Durchführung mindestens eines elektrischen Leiters (5, 6) durch einen metallischen Mantel (1, 2) eines Abgassystems eines Verbrennungsmotors, insbesondere eines elektrisch beheizbaren katalytischen Konverters (11), wobei der Mantel (1, 2) im Bereich der Durchführung einen Kragen (3, 4) aufweist, zwischen denen der elektrische Leiter (5, 6) verläuft,
dadurch gekennzeichnet,
daß die Durchführung in zwei hintereinanderliegende Abschnitte (a, b) unterteilt ist, von denen der erste näher am Abgassystem (11) liegende Abschnitt (a) zur elektrischen Isolierung und beständig gegen Temperaturen von bis zu 1300°C ausgebildet ist, aber nicht vollständig gasdicht zu sein braucht, während der zweite, weiter vom Abgassystem (11) entfernte Abschnitt (b) als gasdichte und elektrisch isolierende Durchführung für Temperaturen von bis zu etwa 500°C ausgebildet ist.

2. Durchführung nach Anspruch 1, dadurch gekennzeichnet, daß als Isoliermaterial im ersten Abschnitt (a) ein keramisches Material (9), vorzugsweise gepreßter Ton, vorhanden ist.

3. Durchführung nach Anspruch 1 oder 2, dadurch gekennzeichnet, daß als Isolier- und Dichtmaterial im zweiten Abschnitt (b) ein elastisch-plastisches Material, vorzugsweise ein für Motor- oder Abgasdichtungen geeignetes Material (10), vorhanden ist.

4. Durchführung nach Anspruch 1, 2 oder 3, dadurch gekennzeichnet, daß zwei elektrische Leiter (5, 6) nebeneinander durch den Mantel (1, 2) geführt sind.

5. Durchführung nach einem der vorhergehenden Ansprüche, dadurch gekennzeichnet, daß jeder elektrische Leiter (5, 6) für Stromstärken von 50 bis 500 Ampere ausgelegt ist.

6. Durchführung nach einem der vorhergehenden Ansprüche, dadurch gekennzeichnet, daß die beiden Abschnitte (a, b) der Durchführung von einer Metallkappe (12) oder Schelle umschlossen sind, die so geformt ist, daß sie zumindest den zweiten Abschnitt (b) umschließt und zusammenpreßt.

7. Durchführung nach einem der vorhergehenden Ansprüche, dadurch gekennzeichnet, daß am Mantel (1, 2) Lappen (3, 4) überstehen und zumindest über die Länge des ersten Abschnittes (a) seitlich miteinander gasdicht als Kragen verbunden, vorzugsweise hartgelötet oder verschweißt sind.

8. Durchführung nach Anspruch 6, dadurch gekennzeichnet, daß die Metallkappe (12) gasdicht den Kragen (3, 4) zumindest teilweise umschließt, vorzugsweise durch Hartlöten oder Schweißen mit diesem verbunden oder an diese angeformt ist.

9. Durchführung nach einem der vorhergehenden Ansprüche, dadurch gekennzeichnet, daß der zweite Abschnitt (b) gegenüber dem ersten Abschnitt (a) abgewinkelt ist, vorzugsweise um einen Winkel (α) von 30° bis 100°, insbesondere etwa 45°.

10. Durchführung nach einem der vorhergehenden Ansprüche, dadurch gekennzeichnet, daß der elektrische Leiter (5, 6) im Bereich der beiden Abschnitte einen größeren Querschnitt als die elektrisch leitenden Strukturen (7, 8), die im Inneren des Abgassystems (11) daran angeschlossen sind, hat.

## Claims

1. An electrically insulating gas-tight feed-through assembly for feeding at least one electrical conductor (5, 6) through a metal casing (1, 2) of an exhaust gas system of an internal combustion engine, in particular an electrically heatable catalytic converter (11), wherein in the region of the feed-through assembly the casing (1, 2) has a collar (3, 4) between which the electrical conductor (5, 6) passes, characterised in that the feed-through assembly is subdivided into two successively disposed portions (a, b) of which the first portion (a) which is closer to the exhaust gas system (11) is designed for electrical insulation and is resistant to temperatures of up to 1300°C but does not need to be completely gas-tight while the second portion (b) which is further away from the exhaust gas system (11) is in the form of a gas-tight and electrically insulating feed-through assembly for temperatures of up to about 500°C.

2. A feed-through assembly according to claim 1 characterised in that a ceramic material (9), preferably pressed clay, is present as insulating material in the first portion (a).

3. A feed-through assembly according to claim 1 or claim 2 characterised in that an elastic-plastic material, preferably a material (10) which is suitable for engine or exhaust gas seals, is provided as insulating and sealing material in the second portion (b).

4. A feed-through assembly according to claim 1, claim 2 or claim 3 characterised in that two electrical conductors (5, 6) are passed in side-by-side relationship through the casing (1, 2).

5. A feed-through assembly according to one of the preceding claims characterised in that each electrical conductor (5, 6) is designed for current strengths of 50 to 500 amperes.

6. A feed-through assembly according to one of the preceding claims characterised in that the two portions (a, b) of the feed-through assembly are enclosed by a metal cap (12) or clip which is so shaped that it embraces and compresses at least the second portion (b).

7. A feed-through assembly according to one of the preceding claims characterised in that lugs (3, 4) project on the casing (1, 2) and are laterally gas-tightly connected together as collars at least over the length of the first portion (a), preferably by hard-soldering or welding.

8. A feed-through assembly according to claim 6 characterised in that the metal cap (12) gas-tightly at least partially embraces the collar (3, 4), is preferably connected thereto by hard-soldering or welding or is formed thereon.

9. A feed-through assembly according to one of the preceding claims characterised in that the second portion (b) is angled relative to the first portion (a), preferably through an angle (α) of 30° to 100°, in particular about 45°.

10. A feed-through assembly according to one of the preceding claims characterised in that the electrical conductor (5, 6) is of a larger cross-section in the region of the two portions than the electrically conductive structures (7, 8) which are connected thereto in the interior of the exhaust gas system (11).

## Revendications

1. Passage étanche aux gaz et isolé électriquement d'au moins un conducteur électrique (5, 6) à travers une gaine métallique (1, 2) d'un système de gaz d'échappement d'un moteur à combustion interne, en particulier d'un convertisseur catalytique chauffé électriquement (11), la gaine (1, 2) comportant, dans la zone du passage, une patte (3, 4), et le conducteur électrique (5, 6) passant entre lesdites pattes, caractérisé en ce que le passage est divisé en deux tronçons (a, b) qui sont disposés l'un derrière l'autre et dont le premier tronçon (a), placé le plus près du système de gaz d'échappement (11), est conçu pour assurer une isolation électrique et résister à des températures jusqu'à 1 300 °C, mais n'est pas nécessairement complètement étanche aux gaz, tandis que le second tronçon (b), situé à distance du système de gaz d'échappement (11), est conçu sous la forme d'un passage étanche aux gaz, isolé électriquement et résistant à des températures jusqu'à environ 500 °C.

2. Passage selon la revendication 1, caractérisé en ce que le matériau isolant utilisé dans le premier tronçon (a) est un matériau céramique (9), de préférence de l'argile pressée.

3. Passage selon la revendication 1 ou 2, caractérisé en ce que le matériau isolant et étanche utilisé dans le second tronçon (b) est un matériau à plasticité élastique, de préférence un matériau approprié à l'étanchéité des moteurs et des gaz d'échappement (10).

4. Passage selon la revendication 1, 2 ou 3, caractérisé en ce que deux conducteurs électriques (5, 6) traversent la gaine (1, 2) côte à côte.

5. passage selon l'une des revendications précédentes, caractérisé en ce que chaque conducteur électrique (5, 6) est conçu pour des intensités de courant de 50 à 500 ampères.

6. Passage selon l'une des revendications précédentes, caractérisé en ce que les deux tronçons (a, b) du passage sont entourés par une coiffe métallique (12) ou un collier, dont la forme leur permet d'entourer et de comprimer au moins le second tronçon (b).

7. Passage selon l'une des revendications précédentes, caractérisé en ce que des languettes (3, 4) font saillie sur la gaine (1, 2) et, au moins sur la longueur du premier tronçon (a), sont reliées, de préférence par brasage dur ou par soudage, latéralement entre elles de manière étanche aux gaz pour former une patte.

8. Passage selon la revendication 6, caractérisé en ce que la coiffe métallique (12) entoure au moins partiellement la patte (3, 4) de manière étanche aux gaz, de préférence en y étant reliée par brasage dur ou par soudage ou en y étant moulée.

9. Passage selon l'une des revendications précédentes, caractérisé en ce que le second tronçon (b) est coudé par rapport au premier tronçon (a), de préférence selon un angle (α) de 30° à 100°, en particulier d'environ 45°.

10. Passage selon l'une des revendications précédentes, caractérisé en ce que le conducteur électrique (5, 6) possède, dans la zone des deux tronçons, une section supérieure à celle des structures de conduction électrique (7, 8) qui y sont reliées à l'intérieur du système de gaz d'échappement (11).
